**Europäisches Patentamt**

**European Patent Office**

**Office européen des brevets**

(11) Veröffentlichungsnummer: **0 023 310**
**B1**

(12) **EUROPÄISCHE PATENTSCHRIFT**

(45) Veröffentlichungstag der Patentschrift:
**08.10.86**

(21) Anmeldenummer: **80104107.0**

(22) Anmeldetag: **15.07.80**

(51) Int. Cl.⁴: **G 01 T 1/16**

(54) Flächendetektor einer Einrichtung zum Nachweis korpuskularer oder elektromagnetischer Strahlung und Verfahren zu seiner Herstellung.

(30) Priorität: **31.07.79 DE 2931096**

(43) Veröffentlichungstag der Anmeldung:
**04.02.81 Patentblatt 81/5**

(45) Bekanntmachung des Hinweises auf die Patenterteilung:
**08.10.86 Patentblatt 86/41**

(84) Benannte Vertragsstaaten:
**DE FR GB**

(56) Entgegenhaltungen:
**DE - A - 2 653 507**
**FR - A - 2 333 353**
**US - A - 3 305 819**
**US - A - 3 824 457**
**US - A - 3 838 907**
**US - A - 4 135 091**

(73) Patentinhaber: **Eder, Franz X., Prof. Dr., Halmstrasse 15a,**
**D-8000 München 25 (DE)**

(72) Erfinder: **Eder, Franz X., Prof. Dr., Halmstrasse 15a,**
**D-8000 München 25 (DE)**

(74) Vertreter: **Mehl, Ernst, Dipl.-Ing. et al, Postfach 22 01 76,**
**D-8000 München 22 (DE)**

ACTORUM AG

## Beschreibung

Die Erfindung bezieht sich auf einen Flächendetektor für eine Einrichtung zum Nachweis korpuskularer oder elektromagnetischer Strahlung mit einer aus kleinen, etwa gleich grossen, metallischen, supraleitenden Detektorelementen gebildeten Empfängerfläche zur Ausnutzung der magnetischen Überhitzungseigenschaften der einem Magnetfeld ausgesetzten Detektorelemente sowie mit einer Vorrichtung zur optischen Registrierung der bestrahlten Detektorelemente. Die Erfindung betrifft ferner ein Verfahren zur Herstellung eines solchen Flächendetektors. Ein entsprechender Flächendetektor ist z.B. aus der DE-A-2 653 507 bekannt.

Bei medizinischen und physikalischen Anwendungen sind heute zur Betrachtung von Röntgenaufnahmen, Beugungsbildern oder Strukturaufnahmen Sichtschirme aus lumineszierenden Kristallschichten oder Bildwandler mit Fotokathoden in Gebrauch. Zur objektiven Wiedergabe von Bildern, die in Zentralprojektion durch die Röntgenröhre oder als Beugungsbild mit monochromatischer Elektronenstrahlung erhalten werden, spielt immer noch der fotografische Film eine dominierende Rolle. Die Eigenschaften dieser Nachweismittel lassen sich in die folgenden unterteilen:

a) Empfindlichkeit, d.h. die gerade noch nachweis- und sichtbare Flächenintensität bezogen auf die einfallende Primärenergie; b) die zeitliche Auflösung des Nachweisverfahrens, die für das zeitliche Verfolgen dynamischer Vorgänge bedeutsam ist. Für einige Anwendungen ist auch noch die Fähigkeit des Detektors wichtig, die auf ihn auftreffende Strahlung hinsichtlich ihrer Energie zu diskriminieren oder aufzusummieren.

Neuerdings hat man spezielle Eigenschaften von supraleitenden kugelförmigen Granulaten dazu verwendet, Korpuskular- oder elektromagnetische Strahlung nachzuweisen. Hierfür wurde der sogenannte magnetische Überhitzungseffekt herangezogen, der darauf beruht, dass ein glatter supraleitender Körper seine supraleitenden Eigenschaften auch dann noch behält, wenn ein äusseres Magnetfeld auf ihn wirkt, das grösser als das Gleichgewichtsfeld ist.

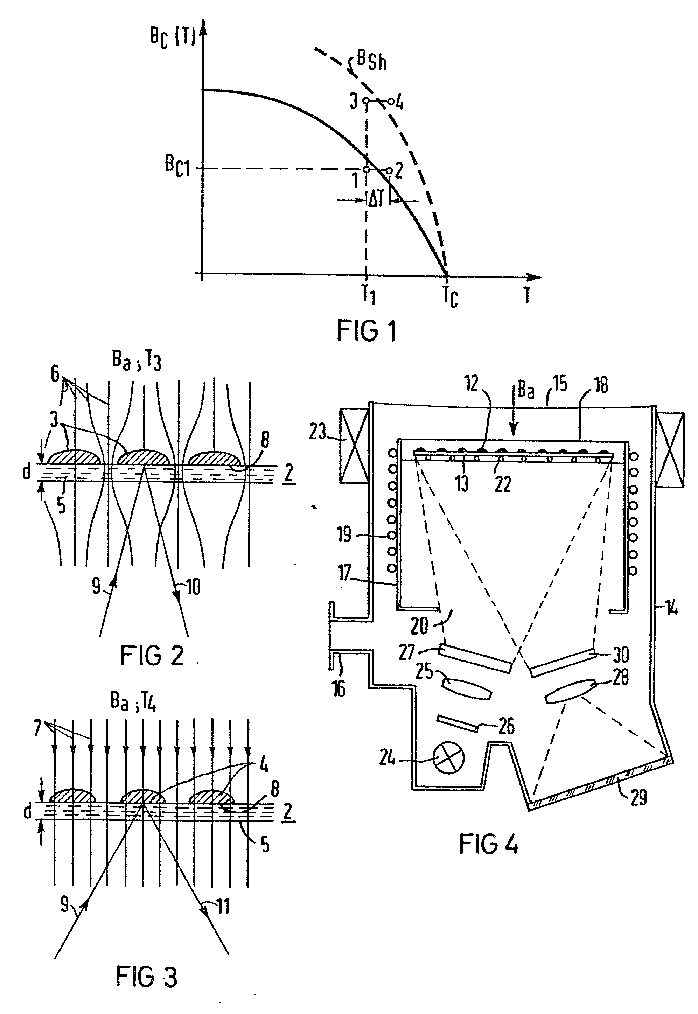

Dieser Überhitzungseffekt wird nachfolgend anhand der Fig. 1 der Zeichnung erläutert. Im Diagramm der Figur ist für ein supraleitendes Material über der Temperatur T diejenige magnetische Induktion $B_c$ in willkürlichen Einheiten aufgetragen, oberhalb derer die Supraleitung nicht mehr möglich ist. Die Phasengrenze zwischen Supra- und Normalleitung ist durch eine durchgezogene Kurve dargestellt.

In der Nähe des Sprungpunktes $T_c$ handelt es sich um relativ kleine magnetische Induktionen; der bei T = 0 erreichte Maximalwert $B_c$ (0) liegt für bekannte supraleitende Stoffe, wie Zinn, Blei oder Quecksilber zwischen 15 und 60 mT.

Der bei supraleitenden Bolometern auf Grund dieses Zusammenhangs zum Nachweis sehr kleiner Strahlungsintensitäten benutzte Effekt geht von einer konstanten Temperatur $T_1$ und einer knapp unterhalb der Phasengrenze zwischen Supra- und Normalleitung liegenden magnetischen Induktion $B_{c1}$ aus. Durch Absorption von Korpuskular- oder elektromagnetischer Strahlung innerhalb eines bestimmten Zeitabschnittes $\Delta t$ wird dem supraleitenden Detektorelement, z.B. einem kleinen Kügelchen, vom Volumen V die Energie $\Delta E$ zugeführt, wodurch sich seine Temperatur um den Betrag $\Delta T = \Delta E / V \cdot \rho \cdot c$ erhöht, wenn $\rho$ und c Dichte bzw. spezifische Wärme des Materials sind. Da in dem infrage kommenden Temperaturbereich zwischen 2 und 3,5 K die spezifische Wärme c wegen des DEBYEschen $T^3$-Gesetzes sehr klein ist und auch das Volumen V äusserst klein gewählt werden kann, lassen sich bereits mit absorbierten Energiebeträgen von der Grösse $\Delta E = 10^{-10}$ J Temperaturzunahmen von $\Delta T = 0,2$ K hervorrufen, die zum Übergang in die normalleitende Phase völlig ausreichen.

Sehr kleine supraleitende Volumina mit glatter Oberfläche, die bei dem Erfindungsgegenstand die Voraussetzung für ein hohes geometrisches Auflösungsvermögen bilden, besitzen die Eigenschaft, dass sie – wie aus Fig. 1 hervorgeht – bei festgehaltener Temperatur $T_1$ nicht bei der Induktion $B_{c1}$ in den normalleitenden Zustand, sondern erst bei einem Wert $B_{sh1}$ übergehen, da die auf das sehr kleine Volumen bezogene relativ grosse Oberflächenenergie das Einsetzen der Normalleitung zunächst verhindert. Man bezeichnet diese von der Art des Supraleiters und seinen geometrischen Abmessungen abhängige magnetische Induktion als Überhitzungsinduktion $B_{sh}$, die um 20 bis 100% höher als der Wert von $B_c$ sein kann. Während der in Fig. 1 eingezeichnete Phasenübergang von einem Punkt 1 nach einem Punkt 2 im Prinzip reversibel ist und beide Zustände durch positive oder negative Temperaturänderungen $\Delta T$ erreichbar sind, ist ein mit 3 gekennzeichneter Zustand metastabil; d.h. ist einmal durch eine kleine Temperaturerhöhung ein jenseits der in der Fig. 1 durch eine gestrichelte Kurve veranschaulichten Phasengrenze liegender normalleitender Zustand 4 erreicht, muss die magnetische Induktion weit unter $B_{c1}$ gesenkt werden, damit das Detektorelement wieder in den supraleitenden Zustand gelangt.

Man bezeichnet mit $p = (B_a - B_c)/B_c$ den Überhitzungsgrad, wenn $B_a$ das angelegte Feld und $B_c$ das thermodynamische bedeutet. Die zum Übergang in die Normalleitung aufzubringende Temperaturerhöhung lässt sich theoretisch zu

$$\Delta T = \frac{B_{sh}(T) - B_a}{-\delta B_{sh}(T)/\delta T}$$

angeben, worin der Nenner die Steigung der $B_{sh}$/T-Kurve angibt. Durch geeignete Wahl des angelegten Feldes $B_a$ lässt sich die für den Phasenübergang notwendige Temperaturerhöhung $\Delta T$ vorgeben, womit auch wegen $\Delta T \sim \Delta E$ eine Diskriminierung hinsichtlich der Energie möglich wird.

Diese an sich bekannten physikalischen Tatsachen erlauben die Konstruktion eines empfindlichen Flächendetektors, sofern es gelingt, für jedes kleine supraleitende Element anzuzeigen, ob es sich im supra- oder normalleitenden Zustand befindet.

Es sind matrixartige Nachweisanordnungen bekannt, bei welchen der supraleitende Zustand eines diskreten Elements durch sein diamagnetisches Verhalten festgestellt wird; d.h. ein von einem dünnen stromdurchflossenen Draht oberhalb des Detektorelements erzeugtes Magnetfeld wird verdrängt, wenn es supraleitend ist, und liefert in einer sogenannten Leseleitung ein entsprechendes Signal.

Bei einer anderen Methode wird ein Flächendetektor nach der Belichtungsphase mit einem dünnen Elektronenstrahl zeilenweise überschrieben, wodurch jedes unbelichtete Element in den normalleitenden Zustand überführt wird. Der Umklappvorgang wird mit einer oder mehreren kleinere Teilflächen umfassenden Pick-up-Spulen nachgewiesen, indem koordiniert und synchron zum Abtast- d.h. Löschstrahl jedes Teilsignal in einem Videogerät aufgezeichnet wird und damit eine Negativaufnahme zustande kommt. Beide Aufzeichnungsverfahren sind recht kompliziert, störanfällig und erfordern umfangreiche Abschirmmassnahmen.

Eine in der eingangs genannten DE-A-2 653 507 beschriebene Vorrichtung zur Feststellung harter Strahlung, deren Energie grösser als 5 keV ist, enthält ein Sondenelement, dessen Empfängerfläche aus einzelnen kleinen, etwas gleichgrossen Detektorbereichen besteht, die freie Körner aus einem metallischen, supraleitenden Material erster Art enthalten und sich in einem äusseren Magnetfeld in einem metastabilen supraleitenden Zustand befinden. Sobald auf diese Detektorelemente darstellenden Körner eine Strahlung auftrifft, gehen sie in den normalleitenden Zustand über. Bei dieser Vorrichtung wird der Effekt ausgenutzt, dass sich an den Körnern angreifende äussere Kräfte bei dem Übergang vom supraleitenden in den normalleitenden Zustand ändern und so die Körner unter Einwirkung z.B. der Erdanziehungskraft bei einem derartigen Übergang ihre Position innerhalb des Sondenelementes ändern. Diese Positionsänderung ist bei der bekannten Vorrichtung optisch feststellbar. Hierzu enthält die Vorrichtung eine Stanhope-Lupe, welche das Sondenelement auf seiner der einfallenden Strahlung abgewandten Seite abschliesst (vgl. Fig. 10a). Die in den normalleitenden Zustand übergegangenen Körner sind in dieser Lupe als glänzende scharfe Flecke zu beobachten, während die verbliebenen supraleitenden Körner im optischen Grund untergegangen sind.

Die Herstellung eines entsprechenden Sondenelementes ist jedoch verhältnismässig aufwendig. Das Sondenelement muss nämlich eine Vielzahl von feinsten kanalartigen Bereichen aufweisen, in denen jeweils ein oder auch mehrere der supraleitenden Körner frei angeordnet werden. Geeignete Strukturen, insbesondere mit sehr kleinen Querschnitten ihrer Kanäle sind jedoch nur schwierig herzustellen. Aufgrund der herstellungstechnisch bedingten unteren Grenze der Kanalquerschnitte ist das Auflösungsvermögen der bekannten Vorrichtung zur Feststellung harter Strahlung dementsprechend begrenzt. Darüber hinaus lässt sich mit der bekannten Vorrichtung nur die Verteilung von Elementarstrahlen feststellen, deren Energie verhältnismässig gross ist und oberhalb eines vorbestimmten Schwellenwertes liegt. Dieser Schwellenwert ist ausserdem von der Grösse der einzelnen Körner abhängig.

Aufgabe der vorliegenden Erfindung ist es, den aus der DE-A-2 653 507 bekannten Flächendetektor hinsichtlich seines Aufbaus zu vereinfachen und dahingehend zu verbessern, dass mit ihm auch eine verhältnismässig niederenergetische Strahlung bei zugleich verhältnismässig hohem Auflösungsvermögen nachgewiesen werden kann.

Diese Aufgabe wird für einen Flächendetektor der eingangs genannten Art erfindungsgemäss dadurch gelöst, dass die Empfängerfläche des Detektors aus einer Schicht aus einem metallischen, supraleitenden Material besteht, wobei diese Schicht in kleine, etwa gleichgrosse Detektorelemente aufgeteilt ist, die auf einem durchsichtigen Körper aus einem Material mit magnetooptischem Verhalten aufgebracht sind, und dass die so gerasterte Empfängerfläche von hinten mit einem monochromatischen, linear polarisierten Lichtbündel beleuchtet und über ein gekreuztes Polarisationsfilter visuell zu beobachten, zu fotografieren oder andersartig zu registrieren ist.

Die Vorteile dieser Ausbildung des Flächendetektors bestehen insbesondere darin, dass seine Empfängerfläche mit einem sehr engmaschigen Raster aus Detektorelementen auf verhältnismässig einfache Weise zu versehen ist. Das Auflösungsvermögen ist dementsprechend gross. Ausserdem ist die Vorrichtung zur optischen Registrierung der Detektorelemente, die aufgrund einer Belichtung mit der Strahlung von dem supraleitenden in den normalleitenden Zustand übergegangen sind, verhältnismässig einfach und ausreichend empfindlich.

Gemäss einem Verfahren zur Herstellung des Flächendetektors nach der Erfindung wird vorteilhaft auf einen Körper aus dem magnetooptisch wirksamen Material eine Schicht aus dem supraleitenden Material aufgebracht und wird anschliessend zumindest die supraleitende Schicht in regelmässig über die Empfängerfläche verteilte, zumindest annähernd gleichgrosse, beispielsweise etwa quadratische Rasterelement als aktive supraleitende Detektorelemente unterteilt.

Vorteilhafte Weiterbildungen des Flächendetektors nach der Erfindung gehen aus den restlichen Unteransprüchen hervor.

Zur weiteren Erläuterung der Erfindung und deren in den Unteransprüchen gekennzeichneten Weiterbildungen wird nachfolgend auf die Zeichnung Bezug genommen, in deren Fig. 2 und 3 ein Flächendetektor nach der Erfindung schematisch veranschaulicht ist. Fig. 4 zeigt schematisch einen Strahlungsempfänger mit einem solchen Flächendetektor.

Das Prinzip des Erfindungsgegenstandes ist vereinfacht an dem in den Fig. 2 und 3 als Querschnitt dargestellten Flächendetektor 2 wiedergegeben. Die Empfängerfläche des Detektors ist in sehr kleine Bereiche mit einer Fläche von z.B. $10^{-4}$ cm² unterteilt und besteht aus kreisförmigen oder auch quadratischen supraleitenden Körnern 3 bzw. 4 aus Zinn, Blei, Aluminium oder Indium. Diese Körner sind als Raster auf der oberen Flachseite eines isolierenden, durchsichtigen Körpers 5, beispielsweise einer Platte, aufgebracht, welche eine gleichmässige Dicke d besitzen soll. Da die als Detektorelemente 3 dienenden Körner im supraleitenden Zustand, d.h. bei einer konstanten Temperatur $T_3$ und einer unterhalb der Grenzkurve liegenden Induktion $B_{sh}$ gemäss Fig. 1 einen von einem homogenen Aussenfeld $B_a$ erzeugten magnetischen Fluss verdrängen, ergibt sich das in Fig. 2 gezeigte Bild von Flusslinien 6. Unterhalb der Detektorelemente 3 ist hingegen die Feldstärke des Aussenfeldes nur noch sehr gering, z.B. nahe Null.

Sind hingegen gemäss Fig. 3 durch einen nicht dargestellten Energieeinfall einer korpuskularen oder elektromagnetischen Strahlung die Detektorelemente 4 in den normalleitenden Zustand übergegangen, wobei sich die Detektorelemente dann auf einer Temperatur $T_4$ befinden, durchsetzt das Aussenfeld $B_a$ diese Elemente in der durch gepfeilte Linien 7 in der Figur angedeuteten Weise. Das Aussenfeld wird also unterhalb der durch die Strahlung belichteten Detektorelemente 4 in der durchsichtigen Platte 5 und unterhalb der Platte nachweisbar sein.

Zum gleichzeitigen Nachweis des magnetischen Feldes auf der Unterseite der belichteten Detektorelemente 4 bedient man sich erfindungsgemäss des an sich bekannten Effektes der Drehung der Polarisationsebene von Licht in einem magnetisch aktiven Material. Dieser magnetische FARADAY-Effekt liefert eine Drehung der Polarisationsebene von linear polarisiertem, monochromatischem Licht, die der durchstrahlten Dicke, einer als VERDET-Konstanten bekannten Materialkonstanten und dem Quadrat der magnetischen Induktion proportional ist. Das ermöglicht die in den Fig. 2 und 3 angegebene Beobachtungsmethode im reflektierten Licht, bei der an der Unterseite 8 der Detektorelemente 3 bzw. 4 ein einfallender Lichtstrahl 9 reflektiert, die optisch aktive Zone der Platte 5 zweimal durchsetzt und aus dieser als Lichtstrahl 10 bzw. 11 wieder austritt. Gemäss dem Beispiel nach Fig. 3 ist der Lichtstrahl 11 durch das in der Platte 5 vorhandene Feld $B_a$ in seiner Polarisationsebene gedreht. Dabei sollten die spiegelnden Unterseiten 8 der Detektorelemente 3 und 4 höchstens Reflexionsvermögen im Sichtbaren aufweisen, damit durch den optischen Nachweis der magnetischen Flussdurchdringung bzw. -verdrängung keine unerwünschte Temperaturerhöhung durch Absorption im Sichtbaren hervorgerufen werden kann. Gegebenenfalls kann deshalb zwischen den einzelnen Detektorelementen 3 und 4 und der magnetooptisch aktiven Platte 5 eine dünne, hochreflektierende Zwischenschicht vorgesehen sein.

Zum Nachweis der Drehung der Polarisationsebene wird im reflektierten Lichtbündel ein in den Fig. 2 und 3 nicht dargestellter Analysator, z.B. in Form eines Polarisationsfilters, angewandt; in dem in Fig. 2 dargestellten Zustand der Detektorelemente 3 werden Polarisator und Analysator um 90° gegeneinander verdreht, wodurch der reflektierte Strahl 10 dunkel erscheint. Im Fall der belichteten Detektorelemente 4 gemäss Fig. 3 erscheinen die Elemente im Blickfeld des Analysators aufgehellt und liefern ein flächenhaftes Bild der Strahlungsverteilung.

Als optisch aktives Material kann man mit Vorteil aufgedampfte Schichten aus Europiumsulfid (EuS) und/oder Europiumfluorid ($EuF_2$) verwenden, deren VERDET-Konstante an sich verhältnismässig gross ist und bei tiefen Temperaturen mit 1/T zunimmt. In der Praxis genügen Schichtdicken von einigen Mikrometern; und da das geometrische Auflösungsvermögen mit der Filmdicke vergleichbar ist, liegt dieses im Bereich von 5 Mikrometern oder weniger. Die Schichten können aus Gründen der mechanischen Stabilität auf einem durchsichtigen Trägerkörper aufgebracht sein. Für gröbere Strukturen sind auch Cer-Phosphat-Gläser von beispielsweise 0,5 mm Dicke geeignet.

Der Flächendetektor 2 kann vorteilhaft hergestellt werden, indem man auf einer Unterschicht aus dem magnetooptisch wirksamen Material, beispielsweise aus EuS und $EuF_2$, eine Schicht aus dem supraleitenden Material wie z.B. Al aufdampft und anschliessend zumindest die supraleitende Schicht in etwa quadratische Rasterelemente auf mechanische Weise oder insbesondere mit Hilfe eines dünnen Elektronenstrahls zu den einzelnen Detektorelementen unterteilt.

In Fig. 4 ist der Erfindungsgedanke in einem Ausführungsbeispiel eines Strahlungsempfängers als Querschnitt dargestellt. Der Empfänger enthält ein Raster 12 aus Detektorelementen, die den Detektorelementen 3 oder 4 nach Fig. 2 bzw. 3 entsprechen und z.B. aus Zinn sind. Das Raster ist auf einem magnetooptisch aktiven Substrat 13 in Form eines sehr dünnen EuS/$EuF_2$-Films aufgebracht und wird innerhalb eines Vakuumgehäuses 14 befestigt. Der Innenraum dieses flachen Gehäuses 14 ist auf der Eintrittsseite für eine nachzuweisende Strahlung von einer dünnen, mit Aluminium bedampften Kunststoffolie 15 abgeschlossen und liegt über einem Saugstutzen 16 an einer Hochvakuumpumpe, so dass die Folie 15 leicht nach innen gewölbt ist. Innerhalb des Vakuumgehäuses 14 befindet sich ein zylindrischer Strahlungsschirm 17 aus Kupfer, der auf der Eintrittsseite der Strahlung ebenfalls mit einer Aluminiumfolie oder einer mit Aluminium bedampften Kunststoffolie 18 abgeschlossen ist und über eine Rohrwendel 19, durch die verdampfendes Helium gesaugt wird, auf einer konstanten Temperatur zwischen 1,5 und 3,5 Kelvin gehalten wird. Der Strahlungsschirm 17, der auf seiner der Eintrittsseite der Strahlung gegenüberliegenden Stirnseite bis auf eine Beobachtungsöffnung 20 ebenfalls geschlossen ist, hat zweckmässig Innenflächen mit einem verhältnismässig grossen Emissionsgrad und stark reflektierende, beispielsweise versilberte Aussenflächen. Die Detektormatrix des Rasters 12 und die optisch aktive Schicht des Substrates 13 werden innerhalb des Strahlungsschirmes 17 durch ein weitmaschiges Netz 22 aus Nylon- oder Teflonfäden gehalten und nehmen durch Strahlungsaustausch mit dem Strahlungsschirm 17 sehr genau dessen Temperatur an.

Durch ein kurzes Solenoid 23, das symmetrisch zur Detektorebene am Aussenumfang des Vakuumgehäuses 14 angebracht ist und von einem einstellbaren Strom durchflossen wird, kann senkrecht zur Detektorebene ein räumlich homogenes, durch einen Pfeil angedeutetes Magnetfeld $B_a$ erzeugt werden, das in der Empfangsphase der Detektormatrix 12 knapp unterhalb des für dessen supraleitendes Material charakteristischen Überhitzungsfeld $B_{sh}$ liegen muss und nach der Aufnahme, d.h. nach der Bestrahlung, kurzzeitig stark erniedrigt wird.

Zur Darstellung der magnetischen Flussverteilung am Detektor wird die Unterseite der Detektormatrix 12 durch eine Lichtquelle 24 und eine Kondensorlinse 25 flächenhaft ausgeleuchtet, wobei zur Monochromatisierung ein Interferenzfilter 26 und als Polarisator ein Polarisationsfilter 27 in den Strahlengang eingebracht werden. Nach Reflexion des polarisierten, monochromatischen Lichtes an den Elementen der Detektormatrix 12 wird deren Unterseite mit einer Objektivlinse 28 auf einem Schirm 29, beispielsweise einer Mattscheibe, abgebildet, nachdem das Lichtbündel vorher ein weiteres, als Analysator dienendes Polarisationsfilter 30 zur Feststellung der Lichtdrehung passiert hat. Im supraleitenden, d.h. unbestrahltem Zustand der Detektormatrix 12 wird der Analysator 30 um etwa 90° gegenüber der Stellung des Polarisators 27 verdreht und ergibt auf dem Schirm ein dunkles Bild. Nach der Belichtungsphase hellen sich alle von der Strahlung getroffenen Bildpunkte auf und liefern ein genaues Abbild der einfallenden Intensität. Die für die Beobachtung des Detektorbildes auf dem Schirm 29 benutzt monochromatische Lichtquelle 24 wird zweckmässig nur dann eingeschaltet, wenn sich das Magnetfeld im überkritischen Bereich des supraleitenden Materials der Detektorelemente 3, 4; 12 befindet.

Nach der Registrierung dieses Abbildes wird das Magnetfeld des Solenoiden 23 kurzzeitig soweit erniedrigt, dass das Bild auf dem Schirm 29 gelöscht erscheint. Anschliessend kann der Abbildungsvorgang wiederholt werden.

Es lässt sich abschätzen, dass zum Nachweis von z.B. 50 keV Elektronen eine Flächenleistung von etwa $10^{-8}$ W/cm² notwendig ist, um eine kontrastreiche Abbildung zu erreichen; d.h. dass damit die Empfindlichkeit moderner Bolometer, die nur an einer Stelle die Intensität messen können, erreicht wird. Die Erfindung beinhaltet ebenfalls andere mögliche konstruktive Anordnungen des Detektors, wie besonders flache Vakuumbehälter, bei denen Beleuchtung und Abbildung über einen halbdurchlässigen, zentral angeordneten Spiegel geschehen und seitlich angebracht sind.

Der Flächendetektor nach der Erfindung ist nicht nur zum Nachweis von hochenergetischer Korpuskular- und Gamma-Strahlung geeignet, sondern er kann auch zum Nachweis von ultravioletter und infraroter Strahlung verwendet werden, sofern man die der Strahlung zugewandten Flächen der Detektorelemente selektiv für die nachzuweisende Strahlung beschichtet. Beispielsweise können im Falle einer Infrarot-Strahlung diese Flächen geschwärzt sein.

## Patentansprüche

1. Flächendetektor für eine Einrichtung zum Nachweis von korpuskularer oder elektromagnetischer Strahlung mit einer aus kleinen, etwa gleich grossen, metallischen, supraleitenden Detektorelementen gebildeten Empfängerfläche zur Ausnutzung der magnetischen Überhitzungseigenschaften der einem Magnetfeld ausgesetzten Detektorelemente sowie mit einer Vorrichtung zur optischen Registrierung der bestrahlten Detektorelemente, dadurch gekennzeichnet, dass die Empfängerfläche des Detektors (2) aus einer Schicht aus einem metallischen, supraleitenden Material besteht, wobei diese Schicht in kleine, etwa gleichgrosse Detektorelemente (3; 4; 12) aufgeteilt ist, die auf einem durchsichtigen Körper (5; 13) aus einem Material mit magnetooptischem Verhalten aufgebracht sind, und dass die so gerasterte Empfängerfläche von hinten mit einem monochromatischen, linear polarisierten Lichtbündel (9) beleuchtet und über ein gekreuztes Polarisationsfilter (27, 30) visuell zu beobachten, zu fotografieren oder andersartig zu registrieren ist.

2. Flächendetektor nach Anspruch 1, dadurch gekennzeichnet, dass der magnetooptisch wirksame Körper (5; 13) eine Schicht aus Europiumsulfid (EuS) und/oder aus Europiumfluorid (EuF$_2$) ist.

3. Flächendetektor nach Anspruch 2, dadurch gekennzeichnet, dass die magnetooptisch wirksame Schicht auf einem durchsichtigen Trägerkörper aufgebracht ist.

4. Flächendetektor nach Anspruch 1, dadurch gekennzeichnet, dass der magnetooptisch wirksame Körper (5; 13) aus einem Cer-Phosphat-Glas besteht.

5. Flächendetektor nach einem der Ansprüche 1 bis 4, dadurch gekennzeichnet, dass die Detektorelemente (3, 4; 12) aus Aluminium oder Zinn oder Indium oder Blei bestehen.

6. Flächendetektor nach einem der Ansprüche 1 bis 5, dadurch gekennzeichnet, dass zwischen den supraleitenden Detektorelementen (3, 4; 12) und dem magnetooptisch wirksamen Körper (5; 13) eine dünne, das monochromatische, polarisierte Licht stark reflektierende Zwischenschicht angeordnet ist.

7. Flächendetektor nach einem der Ansprüche 1 bis 6, dadurch gekennzeichnet, dass sich die Empfängerfläche des Detektors (2) in einem auf die Betriebstemperatur der supraleitenden Detektorelemente (3, 4; 12) tiefgekühlten, innen geschwärzten Strahlungsschutzbehälter (17) befindet, der bis auf die Beobachtungsöffnungen (20, 21) geschlossen, aussen versilbert oder mit einer sonst stark reflektierenden Oberfläche versehen ist und sich in einem Hochvakuumgehäuse (14) befindet.

8. Verfahren zur Herstellung des Flächendetektors nach einem der Ansprüche 1 bis 5, dadurch gekennzeichnet, dass auf einen Körper aus dem magnetooptisch wirksamen Material eine Schicht aus dem supraleitenden Material aufgebracht wird und anschliessend zumindest die supraleitende Schicht in regelmässig über die Empfängerfläche verteilte, zumindest annähernd gleichgrosse, beispielsweise etwa quadratische Rasterelemente als aktive supraleitende Detektorelemente unterteilt wird.

9. Herstellungsverfahren nach Anspruch 8, dadurch gekennzeichnet, dass die supraleitende Schicht aufgedampft wird.

10. Herstellungsverfahren nach Anspruch 8 oder 9, dadurch gekennzeichnet, dass zumindest die supraleitende Schicht mechanisch unterteilt wird.

11. Herstellungsverfahren nach Anspruch 8 oder 9, dadurch gekennzeichnet, dass zumindest die supraleitende Schicht durch einen dünnen Elektronenstrahl unterteilt wird.

## Claims

1. A planar detector for a device for detecting corpuscular or electromagnetic radiation, comprising a receiver surface which is formed from small, approximately equal-sized, metallic, superconductive detector elements and serves to utilize the magnetic superheating properties of the detector elements which are subjected to a magnetic field and comprising a device for the optical registration of the irradiated detector elements, characterised in that the receiver surface of the detector (2) comprises a layer made of a metallic, superconductive material, where said layer is subdivided into small, approximately equal-sized, detector elements (3, 4; 12), which are disposed on a transparent body (5; 13) comprising a material with magneto-optical behaviour, and that the receiver surface subdivided in this manner is irradiated from the rear by means of a monochromatic linearly polarized light beam (9) and can be visually observed, photographed or registered in another fashion by way of a crossed polarization filter (27, 30).

2. A planar detector as claimed in claim 1, characterised in that the magneto-optically active body (5; 13) is a layer of europium sulphide (EuS) and/or europium fluoride ($EuF_2$).

3. A planar detector as claimed in claim 2, characterised in that the magneto-optically active layer is disposed on a transparent carrier body.

4. A planar detector as claimed in claim 1, characterised in that the magneto-optically active body (5; 13) comprises a cerium phosphate glass.

5. A planar detector as claimed in one of claims 1 to 4, characterised in that the detector elements (3, 4; 12) comprise aluminium or tin or indium or lead.

6. A planar detector as claimed in one of claims 1 to 5, characterised in that between the superconductive detector elements (3, 4; 12) and the magneto-optically active body (5; 13), there is arranged a thin intermediate layer strongly reflecting the monochromatic, polarized light.

7. A planar detector as claimed in one of claims 1 to 6, characterised in that the receiver surface of the detector (2) is arranged in an internally blackened protective radiation container (17) which is deep-cooled to the operating temperature of the superconductive detector elements (3, 4; 12) and which is closed except for the observation openings (20, 21), externally silver-coated or provided with an otherwise strongly reflecting surface and positioned in a high-vacuum housing (14).

8. A process for the production of the planar detector as claimed in one of claims 1 to 5, characterised in that a body comprising the magneto-optically active material is coated with a layer comprising the superconductive material and at least the superconductive layer is subsequently subdivided into screen elements, which are regularly distributed over the receiver surface, at least approximately equal-sized and, for example, approximately square, as active superconductive detector elements.

9. A manufacturing process as claimed in claim 8, characterised in that the superconductive layer is vapour-deposited.

10. A manufacturing process as claimed in claim 8 or 9, characterised in that at least the superconductive layer is mechanically subdivided.

11. A manufacturing process as claimed in claim 8 or 9, characterised in that at least the superconductive layer is subdivided by means of a thin electron beam.

## Revendications

1. Détecteur plat pour un dispositif servant à identifier un rayonnement corpusculaire ou électromagnétique, avec une surface réceptrice formée par de petits éléments-détecteurs métalliques et supraconducteurs à peu près de dimensions identiques en vue d'exploiter des propriétés magnétiques de surchauffe des éléments-détecteurs exposés à un champ magnétique, ainsi qu'avec un dispositif pour l'enregistrement optique des éléments-détecteurs irradiés, caractérisé par le fait que la surface réceptrice du détecteur (2) est constituée par une couche d'un matériau métallique supraconducteur, qui est subdivisée en de petits éléments-détecteurs (3, 4; 12) sensiblement de même dimension, déposés sur un corps transparent (5; 13) en une matière à comportement magnéto-optique, et que la surface réceptrice ainsi tramée est éclairée par l'arrière avec un faisceau lumineux (9) monochromatique et polarisée linéairement, et qu'elle est susceptible d'être observée visuellement, ou d'être photographiée ou d'être enregistrée de toute autre manière à travers un filtre à polarisation croisée (27, 30).

2. Détecteur plat selon la revendication 1, caractérisé par le fait que le corps à effet magnéto-optique (5; 13) est une couche faite avec du sulfure d'europium (EuS) et/ou avec un fluorure d'europium ($EuF_2$).

3. Détecteur plat selon la revendication 2, caractérisé par le fait que la couche à effet magnéto-optique est déposée sur un corps de support transparent.

4. Détecteur plat selon la revendication 1, caractérisé par le fait que le corps à effet magnéto-optique (5; 13) est constitué par un verre au phosphate de cérium.

5. Détecteur plat selon l'une des revendications 1 à 4, caractérisé par le fait que les éléments-détecteurs (3, 4; 12) sont constitués par de l'aluminium ou par de l'étain ou par de l'indium ou par du plomb.

6. Détecteur plat selon l'une des revendications 1 à 5, caractérisé par le fait qu'entre les éléments-détecteurs supraconducteurs (3, 4; 12) et le corps à effet magnéto-optique (5; 13) est prévue une couche intermédiaire mince qui reflète fortement la lumière monochromatique et polarisée.

7. Détecteur plat selon l'une des revendications 1 à 6, caractérisé par le fait que la surface réceptrice du détecteur (2) se trouve dans un boîtier de protection contre le rayonnement (17), porté à la basse température pour le fonctionnement des éléments-détecteurs (3, 4; 12) supraconducteurs et noirci intérieurement, lequel boîtier de protection (17) est, à l'exception des ouvertures d'observation (20, 21), argenté extérieurement ou est pourvu d'une autre surface fortement reflétante, et se situe dans un carter (14) à vide poussé.

8. Procédé pour la réalisation du détecteur plat selon l'une des revendications 1 à 5, caractérisé par le fait que sur un corps fait en un matériau à effet magnéto-optique, on dépose une couche en un matériau supra-conducteur et que l'on divise ensuite, au moins la couche supra-conductrice en des éléments tramés, au moins sensiblement carrés, et répartis régulièrement sur la surface réceptrice et ayant sensiblement une même grandeur, lesdits éléments tramés constituant les éléments-détecteurs à action supra-conductrice.

9. Procédé de fabrication selon la revendication 8, caractérisé par le fait que la couche supra-conductrice est déposée par vaporisation.

10. Procédé de fabrication selon la revendication 8 ou 9, caractérisé par le fait qu'au moins la couche supra-conductrice est subdivisée par voie mécanique.

11. Procédé de fabrication selon la revendication 8 ou 9, caractérisé par le fait qu'au moins la couche supra-conductrice est subdivisée à l'aide d'un faisceau électronique mince.

FIG 1

FIG 2

FIG 3

FIG 4